# EUROPEAN PATENT SPECIFICATION

(11) **EP 1 419 722 B1**
(45) Date of publication and mention of the grant of the patent: **05.09.2007**
(21) Application number: 03025149.0
(22) Date of filing: 03.11.2003
(51) Int. Cl.: A47J 37/04, A47J 37/06, A47J 37/08

(54) **Machine for heating food units**
Gerät zum Erwärmen von Nahrungsmitteleinheiten
Machine pour chauffer des unités de nourriture

(30) Priority: 08.11.2002 IT MI20022381
(43) Date of publication of application: 19.05.2004
(73) Proprietor: Techfood S.N.C. di Iori e Castagnetti, 42024 Castelnovo Di Sotto (RE) (IT)
(72) Inventor: Iori, Angelo, 42100 Reggio Emilia (RE) (IT)
(74) Representative: Giambrocono, Alfonso

(56) References cited:
- US-A- 3 119 000
- US-A- 4 059 398
- US-B1- 6 201 218

## Description

The present invention relates to a machine for heating food units, such as filled or unfilled bread rolls, pizza slices, brioches and more generally oven products or their derivatives.

As is well known to the expert of the art, food units of the aforesaid type are currently marketed prepackaged in relative polyethylene bags, enabling these units to be preserved for a considerable time in a refrigerator (at a temperature from 0 to 4°C) or for a short time at ambient temperature. These food units are also loaded into automatic refrigerated dispensers, from which they can be withdrawn by the public by inserting coins or a token of the corresponding value into the dispenser, or by using so-called prepaid magnetic keys for the same purpose.

These food units are hardly appetising if consumed at the temperature at which they are dispensed by the automatic refrigerated dispenser or withdrawn from the refrigerator, or even if consumed at ambient temperature, whereas they are much more appetising if suitably heated. For their heating, whether in public premises or at the domestic level, conventional electrical hotplates are used, provided with two openable plate sections between which one or more of said food units are disposed. The use of these electrical hotplates for heating such food units presents however the drawback that when their two plate sections are opened to withdraw a heated food unit their inner surfaces are at a temperature which can burn the hands of the user. The same risk applies when inserting a food unit to be heated between already hot plate sections, with the plates already up to temperature.

US-4059398-A discloses a food oven which comprises: an inlet in which the user can dispose a food unit to be heated; a oven chamber adjacent to the inlet, in which heating of the food unit takes place at a required temperature and for a required time; an outlet adjacent to the oven chamber, from which the user can remove the heated food unit; a conveyor which continuously moves the food unit from the inlet to the outlet, at the same time maintaining the food unit in the oven chamber four a predetermined time. In particular, in the embodiment of this oven as shown in the drawings, when the door of the inlet opening is opened, the user can easily reach the oven chamber with his hand, which chamber, as stated above, is adjacent to the inlet and may cause burns.

The object of the present invention is to provide a machine for heating prepackaged or non-prepackaged food units, without any risk of burns for the user.

This object is attained by the machine according to the enclosed claims.

As will be easily apparent, as this machine does not enable the user to come into contact with machine parts having a temperature which can cause burns, maximum safety is assured in use, so that even a child or a distracted person can use the machine of the invention without being burned.

The machine is preferably provided with a control unit (conveniently of the microprocessor type) which enables the machine operation to be regulated and in particular the heating temperature of the food unit or units on the basis of the type of food unit to be heated and/or of the user's taste.

The invention will be more apparent from the ensuing description of one embodiment thereof given by way of example. In this description reference is made to the accompanying drawings, in which:
Figure 1 is a perspective view of the machine according to the invention;
Figure 2 shows the same perspective view as Figure 1, with the difference that a part of the casing has been removed from the machine;
Figure 3 shows the same perspective view as Figure 2, with the difference that a more internal part of the casing has been removed;
Figure 4 shows the same perspective view as Figure 3, with the difference that an inverted U-shaped partition upperly and laterally bounding the machine withdrawal zone has been removed;
Figure 5 is a side elevation of the machine in the condition of Figure 4 on a reduced scale, the view being taken in the direction of the arrow 5 of said figure;
Figure 6 is a rear elevation of the machine in the condition of Figure 4 on the same scale as Figure 5, the view being taken in the direction of the arrow 6 of said figure;
Figure 7 is a perspective view of a second embodiment of the machine of the invention;
Figure 8 is a perspective view of the machine of Figure 7 from a first side, but without the casing;
Figure 9 is a perspective view of the machine of Figure 7 from a second side, but without the casing; and
Figure 10 is a perspective view of the internal components of the machine of Figure 7.

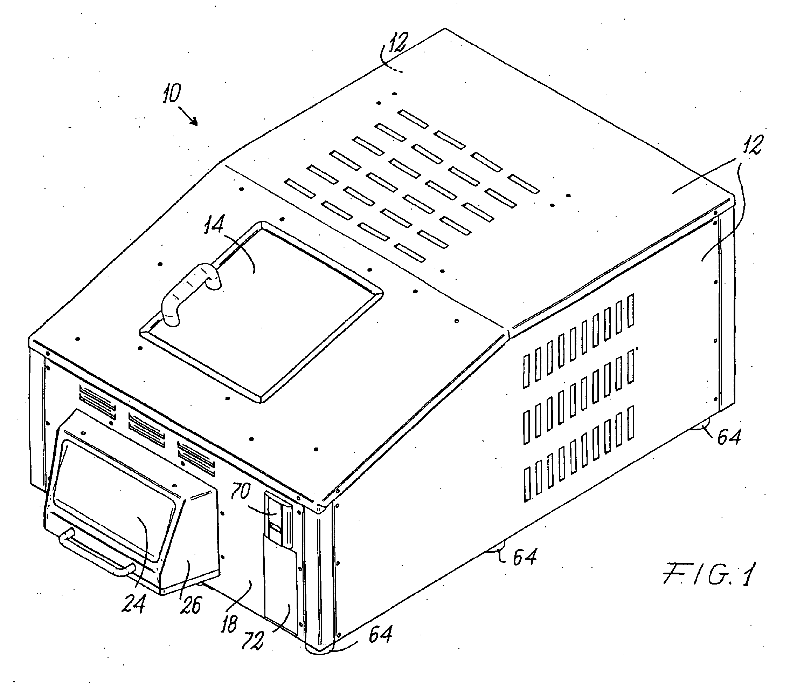

As can be seen from Figure 1, the machine 10 is of substantially rectangular plan in shape.

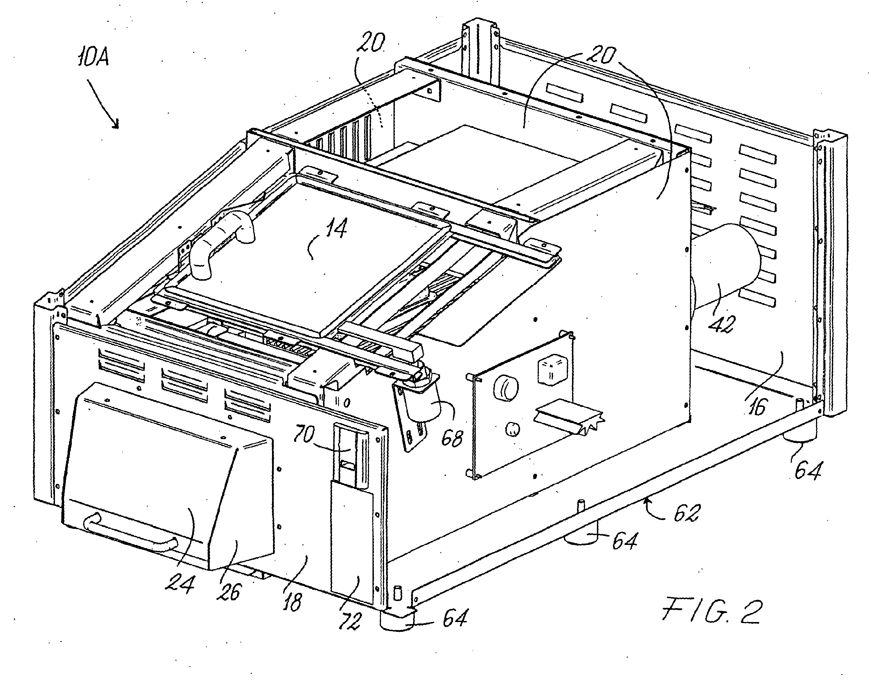

The side and upper walls of the machine 10 form a single removable casing element indicated overall by 12. In Figure 2 the machine (now indicated by 10A) is shown without the casing element 12, the front upper part of which is inclined and presents a rectangular aperture to which a door 14, openable by lateral sliding (as will be apparent on observing Figure 2), is applied to close access to the insertion zone.

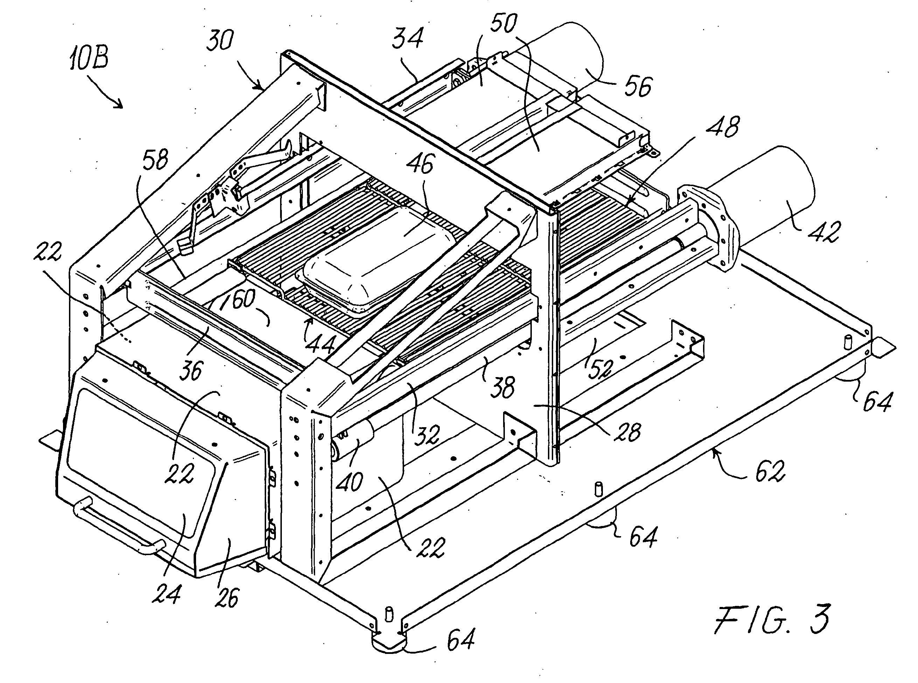

In Figure 3, the machine (indicated by 10B), has been further stripped of a rear casing element 16, a front casing element 18, a more internal partition, indicated overall by 20 and extending laterally and rearward, and the door 14 (all visible in Figure 2).

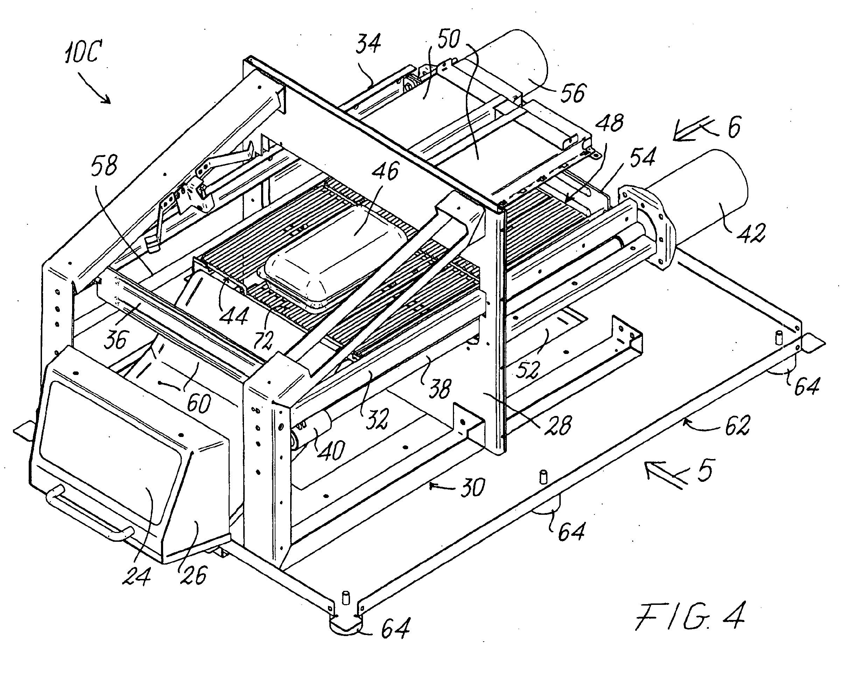

In Figures 4, 5 and 6 the machine (indicated by 10C) has also been stripped of a portal partition (indicated overall by 22) which upperly and laterally covers the machine withdrawal zone to which access is gained via a door 24 provided in a frontally projecting part 26, the door being openable by turning it upwards.

As can be seen from Figures 3 and 4, the machine 10 is provided with a transverse intermediate frame 28 disposed in a vertical plane and forming part of the internal machine structure, this structure being indicated overall by 30 and being fixed by the floor 62 supported by feet 64. The structure 30 carries two horizontal, parallel lateral guides 32 and 34 on which a rectangular blade 36 lying in a transverse vertical plane can slide in both senses in a longitudinal direction. The blade 36 is essentially a pusher and is operated by a mechanism driven by an electric motor 42 and comprising a lead screw 38 and nut screw 40, the nut screw 40 being fixed to one end of the blade 36.

The structure 30 also carries front horizontal grid 44 of stainless steel, which acts as a support and slide surface. The central part of the grid 44 presents in this specific example a sunken longitudinal portion 72 for receiving and guiding a food unit 46 consisting in this case of a typical filled bread roll of the type dispensed by known automatic refrigerated dispensers (but it could also be a simple bread roll, a filled roll prepared at that moment or another food unit to be heated). The shape of said sunken portion can vary according to the food unit to be heated. For this purpose several interchangeable grids can be provided, each with its sunken portion shaped to receive the relative food unit, grids with several sunken portions being also providable if several food units are to be heated at the same time.

The structure 30 also carries a rear horizontal grid 48, consecutive to the front grid 44, and disposed in the aforesaid heating zone.

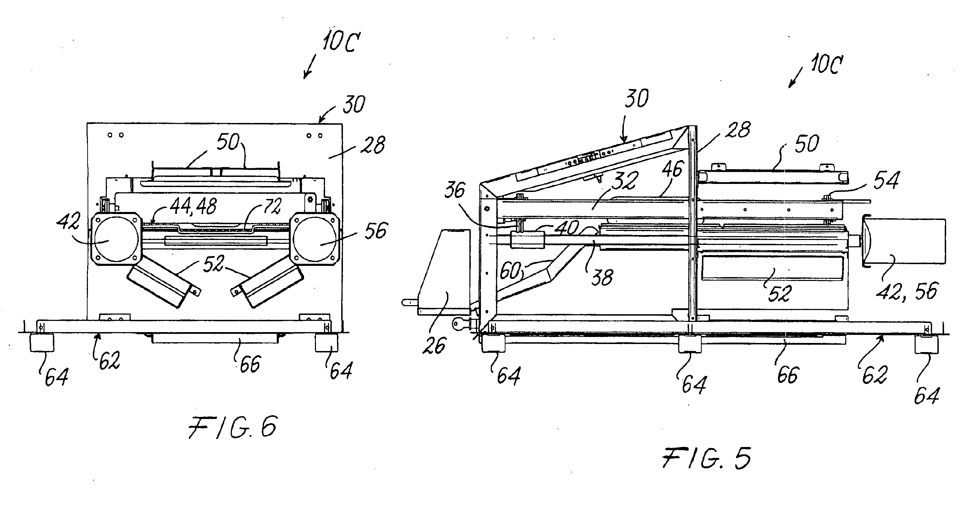

By operating the device comprising the lead screw 38 and nut screw 40 by means of the motor 42, the blade 36 can push the food unit 46 from its insertion position (Figure 4) to a position in which the food unit 46 lies on the rear grid 48, in the heating zone. In this zone two electrical resistance elements 50 are provided disposed above the rear grid 48, two other electrical resistance elements 52 being disposed below this latter. As can be seen from Figure 6, the two lower electrical resistance elements 52 are inclined symmetrically in order not to allow any crumbs falling from the rear grid 48 to remain on the resistance elements, but instead to fall into a box 66 (Figure 6) which can be removed for cleaning.

After activating the electrical resistance elements 50 and 52 and after the time required to adequately heat the food unit 46 within the heating zone, a second rectangular blade 54, also slidable along the guides 32 and 34, urges the food unit 46 rearward. This is achieved by operating a second electric motor 56 driving a mechanism comprising a lead screw 58 and nut screw (not visible, but identical to the nut screw 40), disposed on the opposite side of the machine 10 to the mechanism 38-40, the nut screw being fixed to one end of the second blade 54..

The operation of the second electric motor 56 is not interrupted until the heated food unit 46 passes beyond the first grid 44, to fall along a chute 60 and hence reach the withdrawal zone bounded by the projecting part 26, the user being able to withdraw the food unit 46 from the withdrawal zone by opening the door 24.

As will be apparent from the aforegoing and on observing the figures, the user does not come into contact with parts having a temperature which can be dangerous either when inserting the food unit 46 to be heated or when extracting it once heated, so that the machine offers maximum safety from this viewpoint.

For even greater safety (for example to prevent a child seeking to enter the heating zone through the insertion door 14), the machine 10 comprises a conventional electromagnet device 68 to prevent the door 14 being opened when the machine is operating. A device can also be provided to prevent the machine 10 being activated if the insertion door 14 is not closed.

In the specific illustrated example the machine 10 is provided with a device 70 for payment by a prepaid magnetic key. Other payment devices, for example for coins or tokens, could be provided as an alternative.

The machine 10 is also provided with a control unit (not shown) preferably of microprocessor type, and with a relative keypad 72, indicated very schematically as only an outline in Figures 1 and 2.

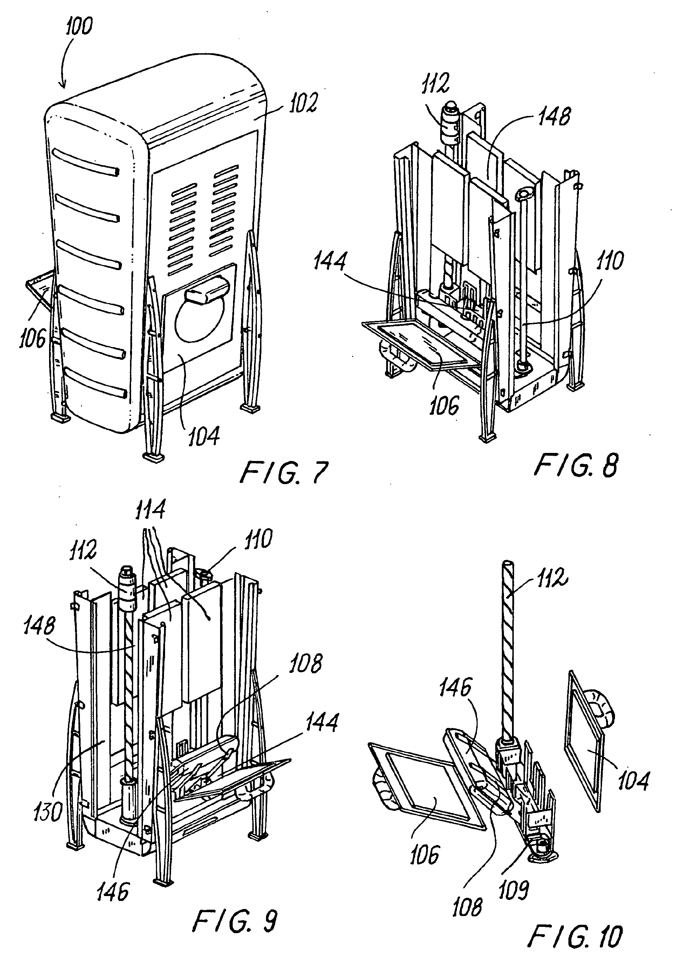

Modifications and variations in addition to those already described are possible, for example the embodiment of the machine 100 for heating food units shown in Figures 7-10 extends substantially vertical.

This machine presents a structure 130 closable by a casing 102 provided with two doors 104 and 106 giving access to its interior, where a grid-shaped or plate-shaped support 108 is housed, connected in such a manner as to be able to rotate relative to a carriage 109; the doors 104 and 106 are advantageously positioned on opposite sides of the casing 102.

The carriage 109 is slidingly connected to a guide 110 and also to an actuator 112 comprising a lead screw with which a nut screw rigid with the carriage 109 is engaged.

In correspondence with its upper portion the machine presents electrical resistance heating elements 114 between which the food unit is positioned during its heating the heating zone being indicated by 148.

When a food unit 146 is to be heated by the machine of this embodiment, the door on the operator side is opened, for example the door 104; the support 108 rotates independently by gravity relative to the carriage 109 in the direction of the open door 104.

The food unit 146 can then be easily inserted into the support 108, after which the door is closed and heating is started. The insertion zone is indicated by 144.

The actuator 112 causes the carriage 109 to rise (together with the support 108 rigid with it); the support 108 is positioned between the resistance elements 114 for the time required for heating.

The actuator 112 then causes the carriage 109 to descend and when this latter is again positioned in its lower position in correspondence with the doors, the client can open the door 106 on his side, causing the support 108 to automatically rotate towards that side; the client can then extract the food product 146.

This embodiment of the machine is particularly advantageous as it is of very small overall size in plan.

Advantageously a safety system preventing opening of one door when the other is open can also be provided.

This safety system, not shown, can be formed by means of electronic elements and, preferably, by means of a lever mechanism.

Hence, in practice the insertion and withdrawal zones are defined in correspondence with the doors, the heating zone is defined in correspondence with the resistance elements, and the means for conveying the food unit from the insertion zone to the heating zone and from the heating zone to the withdrawal zone comprise the support 108, the carriage 109 and the actuator 112.

## Claims

1. A machine (10; 100) for heating food units (46;146), comprising:
an insertion zone (44; 144) in which the user can dispose one (46;146) or more foods units to be heated, those part of this zone (44; 144) which can be touched by the user having a temperature less than that which can cause burns;
a heating zone (48; 148) within which heating of the food unit (46;146) or units takes place at the required temperature and for the required time;
a withdrawal zone (26; 144) from which the user can remove the heated food unit (46; 146) or units;
means (36, 38, 40, 42; 109, 112) for conveying the food unit (46; 146) or units from the insertion zone (44; 144) to the heating zone (48; 148);
means (54, 56, 58; 109, 112) for conveying the food unit (46; 146), once heated, from the heating zone (48; 148) to the withdrawal zone (26; 144);
the heating zone (48; 148) being remote from both the insertion zone (44; 144) and withdrawal zone (26; 144);
charaterised in that the food unit (46; 146) remains stationary during the heating phase in the remote heating zone (48; 148).

2. A machine (10; 100) as claimed in claim 1, wherein the insertion zone (44, 144) is accessed via an openable insertion door (14; 104).

3. A machine (10; 100) as claimed in claim 1, wherein the withdrawal zone (26; 144) is accessed via an openable withdrawal door (24; 106).

4. A machine (10; 100) as claimed in claim 2, wherein means are provided to prevent opening of the insertion door (14; 104) when the machine (10; 100) is operating.

5. A machine (10; 100) as claimed in claim 2, wherein means are provided to prevent machine activation if the insertion door (14; 104) is open.

6. A machine (10) as claimed in claim 1, wherein the means for conveying the food unit (46) or units from the insertion zone (44) to the heating zone (48) and from the heating zone (48) to the withdrawal zone (26) comprise pusher means (36, 54),the food unit (46) or units being able to slide on a relative support surface (44, 48) which connects said three zones together.

7. A machine (10) as claimed in claim 6, wherein the support surface is formed from one or more grids (44, 48).

8. A machine (10) as claimed in claim 6, wherein the withdrawal zone (26) is located roughly in correspondence with the insertion zone (44) but lies below it, the support surface (44) in the insertion zone being connected to the withdrawal zone (26), by a chute (60), the pusher means comprising a first pusher (36) to convey the food unit (46) or units to be heated from the insertion zone (44) to the heating zone (48), and a second pusher (54) to return the food unit (46) or units from the heating zone (48) to beyond the insertion zone (44) so that the food unit (46) or units fall into the chute (60) connected to the withdrawal zone (26).

9. A machine (10) as claimed 6, wherein the pusher means (36, 54) are operated by a lead screw (38, 58) and nut screw (40) mechanism.

10. A machine as claimed in claim 9, wherein the lead screw (38, 58) and nut screw (40) mechanism is driven by an electric motor (42, 56).

11. A machine (10; 100) as claimed in claim 1, wherein the food unit (46; 146) or unit are heated within the heating zone (48; 148) by electrical resistance elements (50, 52; 144).

12. A machine (10) as claimed in claim 11, wherein the electrical resistance elements are disposed both above (50) and below (52) the food unit (46) or units within the heating zone (48).

13. A machine (10 as claimed in claims 12 and 7, wherein those electrical resistance elements disposed below (52) are inclined such that any crumbs which fall through the grid (48) on which the food unit (46) or units rest do not remain on the resistance elements (52).

14. A machine (10) as claimed in claim 13, wherein a removable box (66) is provided to collect any crumbs.

15. A machine (10; 100) as claimed in claim 1, wherein a control unit is provided to control the machine operation.

16. A machine (10;100) as claimed in claim 1, wherein a payment device is provided.

17. A machine (10) as claimed in claim 7 and 8, wherein the grid or grids (44, 48) present one (72) or more sunken portion extending in the direction of movement of the pushers (36, 54) the sunken portion (72) or portions being arranged to receive and guide the relative food units (46).

18. A machine (100) as claimed claim 1, wherein the conveying means comprise a carriage (109) which is connected to an actuator (112) arranged to translate it from the insertion zone (144) to the heating zone (148), and from the heating zone (148) to the withdrawal zone (144).

19. A machine (100) as claimed in claims 1, 2 and 3, wherein said doors (104; 106) are positioned on opposite sides of the machine (100).

20. A machine (100) as claimed in claim 18, wherein a support (108) is fixed to said carriage (109) in such a manner as to be able to rotate.

21. A machine (100) as claimed in claims 2 and 3, wherein a safety system prevents the opening of one door (104, 106) when the other (106, 104) is open.

## Patentansprüche

1. Maschine (10; 100) zum Erwärmen von Lebensmitteleinheiten (46; 146), umfassend:
eine Einführzone (44; 144), in die der Benutzer eine (46; 146) oder mehrere zu erwärmende Lebensmitteleinheiten einlegen kann, wobei derjenige Teil dieser Zone (44; 144), der vom Benutzer berührt werden kann, eine Temperatur hat, die unter derjenigen liegt, die Verbrennungen verursachen kann;
eine Heizzone (48; 148), in der ein Erwärmen der Lebensmitteleinheit (46; 146) oder -einheiten bei der erforderlichen Temperatur und über die erforderliche Zeit stattfindet;
eine Entnahmezone (26; 144), aus welcher der Benutzer die erwärmte Lebensmitteleinheit (46; 146) oder -einheiten entnehmen kann;
Mittel (36, 38, 40, 42; 109, 112) zum Transportieren der Lebensmitteleinheit (46; 146) oder -einheiten von der Einführzone (44; 144) zur Heizzone (48; 148);
Mittel (54, 56, 58; 109; 112) zum Transportieren der Lebensmitteleinheit (46; 146) nach dem Erwärmen von der Heizzone (48; 148) zur Entnahmezone (26; 144);
wobei die Heizzone (48; 148) sowohl von der Einführzone (44; 144) als auch von der Entnahmezone (26; 144) entfernt ist;
**dadurch gekennzeichnet, dass** die Lebensmitteleinheit (46; 146) während der Heizphase in der entfernten Heizzone (48; 148) stationär bleibt.

2. Maschine (10; 100) nach Anspruch 1, wobei die Einführzone (44, 144) über eine zu öffnende Einführtür (14; 104) zugänglich ist.

3. Maschine (10; 100) nach Anspruch 1, wobei die Entnahmezone (26; 144) über eine zu öffnende Entnahmetür (24; 106) zugänglich ist.

4. Maschine (10; 100) nach Anspruch 2, wobei Mittel vorgesehen sind, um ein Öffnen der Einführtür (14; 104) zu verhindern, wenn die Maschine (10; 100) in Betrieb ist.

5. Maschine (10; 100) nach Anspruch 2, wobei Mittel vorgesehen sind, um eine Aktivierung der Maschine zu verhindern, wenn die Einführtür (14; 104) offen ist.

6. Maschine (10) nach Anspruch 1, wobei die Mittel zum Transportieren der Lebensmitteleinheit (46) oder -einheiten von der Einführzone (44) zur Heizzone (48) und von der Heizzone (48) zur Entnahmezone (26) Schiebermittel (36, 54) umfassen, wobei die Lebensmitteleinheit (46) oder -einheiten dazu fähig sind, auf einer relativen Auflagefläche (44, 48) zu gleiten, welche die drei Zonen miteinander verbindet.

7. Maschine (10) nach Anspruch 6, wobei die Auflagefläche durch einen oder mehrere Roste (44, 48) gebildet wird.

8. Maschine (10) nach Anspruch 6, wobei die Entnahmezone (26) ungefähr in Entsprechung zur Einführzone (44) angeordnet ist, jedoch unterhalb von ihr liegt, wobei die Auflagefläche (44) in der Einführzone über einen Schacht (60) mit der Entnahmezone (26) verbunden ist, wobei die Schiebermittel einen ersten Schieber (36) zum Transportieren der zu erwärmenden Lebensmitteleinheit (46) oder -einheiten von der Einführzone (44) zur Heizzone (48), und einen zweiten Schieber (54) zum Rückführen der Lebensmitteleinheit (46) oder -einheiten von der Heizzone (48) über die Einführzone (44) hinaus umfassen, so dass die Lebensmitteleinheit (46) oder -einheiten in den mit der Entnahmezone (26) verbundenen Schacht (60) fällt bzw. fallen.

9. Maschine (10) nach Anspruch 6, wobei die Schiebermittel (36, 54) von einem eine Spindel (38, 58) und eine Spindelmutter (40) aufweisenden Mechanismus betätigt werden.

10. Maschine nach Anspruch 9, wobei der die Spindel (38, 58) und die Spindelmutter (40) aufweisende Mechanismus von einem Elektromotor (42, 56) angetrieben wird.

11. Maschine (10; 100) nach Anspruch 1, wobei die Lebensmitteleinheit (46; 146) oder -einheiten innerhalb der Heizzone (48; 148) durch elektrische Widerstandselemente (50, 52; 144) erwärmt werden.

12. Maschine (10) nach Anspruch 11, wobei die elektrischen Widerstandselemente sowohl oberhalb (50) als auch unterhalb (52) der Lebensmitteleinheit (46) oder -einheiten innerhalb der Heizzone (48) angeordnet sind.

13. Maschine (10) nach den Ansprüchen 12 und 7, wobei diejenigen elektrischen Widerstandselemente, die unterhalb (52) angeordnet sind, so geneigt sind, dass Krümel, die eventuell durch den Rost (48) fallen, auf dem die Lebensmitteleinheit (46) oder -einheiten liegt bzw. liegen, nicht auf den Widerstandselementen (52) liegen bleiben.

14. Maschine (10) nach Anspruch 13, wobei ein herausnehmbarer Kasten (66) vorgesehen ist, um eventuell anfallende Krümel zu sammeln.

15. Maschine (10; 100) nach Anspruch 1, wobei eine Steuerungseinheit vorgesehen ist, um den Betrieb der Maschine zu steuern.

16. Maschine (10; 100) nach Anspruch 1, wobei eine Bezahlvorrichtung vorgesehen ist.

17. Maschine (10) nach Anspruch 7 und 8, wobei der Rost oder die Roste (44, 48) einen (72) oder mehrere vertiefte Teile bildet bzw. bilden, der bzw. die sich in der Richtung der Bewegung der Schieber (36, 54) erstreckt bzw. erstrecken, wobei der vertiefte Teil (72) oder die vertieften Teile so angeordnet ist bzw. sind, dass er bzw. sie die jeweiligen Lebensmitteleinheiten (46) aufnimmt bzw. aufnehmen und führt bzw. führen.

18. Maschine (100) nach Anspruch 1, wobei die Transportmittel einen Wagen (109) umfassen, der mit einem Betätigungsglied (112) verbunden ist, das dazu angeordnet ist, ihn von der Einführzone (144) zur Heizzone (148) und von der Heizzone (148) zur Entnahmezone (144) zu verfahren.

19. Maschine (100) nach den Ansprüchen 1, 2 und 3, wobei die Türen (104; 106) an gegenüberliegenden Teilen der Maschine (100) angeordnet sind.

20. Maschine (100) nach Anspruch 18, wobei eine Auflage (108) derart an dem Wagen (109) befestigt ist, dass sie rotieren kann.

21. Maschine (100) nach den Ansprüchen 2 und 3, wobei ein Sicherheitssystem das Öffnen einer Tür (104, 106) verhindert, wenn die jeweils andere Tür (106, 104) offen ist.

## Revendications

1. Machine (10 ; 100) pour chauffer des unités alimentaires (46 ; 146), comportant :
une zone d'insertion (44 ; 114) dans laquelle l'utilisateur peut disposer une (46 ; 146) ou plusieurs unités alimentaires devant être chauffées, cette partie de cette zone (44 ; 144) qui peut être touchée par l'utilisateur ayant une température inférieure à celle qui peut provoquer des brûlures,
une zone de chauffage (48 ; 148) à l'intérieur de laquelle un chauffage de l'unité ou des unités alimentaires (46 ; 146) a lieu à la température nécessaire et pendant le temps nécessaire,
une zone de retrait (26 ; 144) à partir de laquelle l'utilisateur peut enlever l'unité ou les unités alimentaires chauffées (46 ; 146),
des moyens (36, 38, 40, 42 ; 109, 112) pour transporter l'unité ou les unités alimentaires (46 ; 146) à partir de la zone d'insertion (44 ; 144) vers la zone de chauffage (48 ; 148),
des moyens (54, 56, 58 ; 109, 112) pour transporter l'unité alimentaire (46 ; 146), une fois chauffée, à partir de la zone de chauffage (48 ; 148) vers la zone de retrait (26 ; 144),
la zone de chauffage (48 ; 148) étant à distance de la zone d'insertion (44 ; 144) et de la zone de retrait (26 ; 144),
**caractérisée en ce que** l'unité alimentaire (46 ; 146) reste stationnaire pendant la phase de chauffage dans la zone de chauffage à distance (48 ; 148).

2. Machine (10 ; 100) selon la revendication 1, dans laquelle la zone d'insertion (44, 144) est accessible via une porte d'insertion pouvant être ouverte (14 ; 104).

3. Machine (10 ; 100) selon la revendication 1, dans laquelle la zone de retrait (26 ; 144) est accessible via une porte de retrait pouvant être ouverte (24 ; 106).

4. Machine (10 ; 100) selon la revendication 2, dans laquelle des moyens sont fournis pour empêcher l'ouverture de la porte d'insertion (14 ; 104) lorsque la machine (10 ; 100) fonctionne.

5. Machine (10 ; 100) selon la revendication 2, dans laquelle des moyens sont fournis pour empêcher un actionnement de la machine si la porte d'insertion (14 ; 104) est ouverte.

6. Machine (10) selon la revendication 1, dans laquelle les moyens pour transporter l'unité ou les unités alimentaires (46) à partir de la zone d'insertion (44) vers la zone de chauffage (48), et à partir de la zone de chauffage (48) vers la zone de retrait (26), comportent des moyens formant poussoir (36, 54), l'unité ou les unités alimentaires (46) étant capables de coulisser sur une surface de support relative (44, 48) qui relie lesdites trois zones ensemble.

7. Machine (10) selon la revendication 6, dans laquelle la surface de support est formée à partir d'une ou de plusieurs grilles (44, 48).

8. Machine (10) selon la revendication 6, dans laquelle la zone de retrait (26) est positionnée grossièrement en correspondance avec la zone d'insertion (44), mais s'étend en dessous de celle-ci, la surface de support (44) dans la zone d'insertion étant reliée à la zone de retrait (26) par une goulotte (60), les moyens formant poussoir comportant un premier poussoir (36) pour transporter l'unité ou les unités alimentaires (46) devant être chauffées à partir de la zone d'insertion (44) vers la zone de chauffage (48), et un second poussoir (54) pour envoyer l'unité ou les unités alimentaires (46) à partir de la zone de chauffage (48) vers au-delà de la zone d'insertion (44), de telle sorte que l'unité ou les unités alimentaires (46) tombent dans la goulotte (60) reliée à la zone de retrait (26).

9. Machine (10) selon la revendication 6, dans laquelle les moyens formant poussoir (36, 54) sont actionnés par un mécanisme à vis-mère (3 8, 58) et écrou taraudé (40).

10. Machine selon la revendication 9, dans laquelle le mécanisme à vis-mère (38, 58) et écrou taraudé (40) est entraîné par un moteur électrique (42, 56).

11. Machine (10 ; 100) selon la revendication 1, dans laquelle l'unité ou les unités alimentaires (46 ; 146) sont chauffées dans la zone de chauffage (48 ; 148) par des éléments formant résistance électrique (50, 52 ; 144).

12. Machine (10) selon la revendication 11, dans laquelle les éléments formant résistance électrique sont disposés au-dessus (50) et au-dessous (52) de l'unité ou des unités alimentaires (46) dans la zone de chauffage (48).

13. Machine (10) selon l'une quelconque des revendications 12 et 7, dans laquelle ces éléments formant résistance électrique disposés en dessous (52) sont inclinés de telle sorte que de quelconques miettes qui tombent à travers la grille (48) sur laquelle l'unité ou les unités alimentaires (46) sont en appui ne restent pas sur l'élément formant résistance (52).

14. Machine (10) selon la revendication 13, dans laquelle une boîte amovible (66) est fournie pour recueillir de quelconques miettes.

15. Machine (10 ; 100) selon la revendication 1, dans laquelle une unité de commande est fournie pour commander l'actionnement de la machine.

16. Machine (10 ; 100) selon la revendication 1, dans laquelle un dispositif de paiement est fourni.

17. Machine (10) selon la revendication 7 ou 8, dans laquelle la grille ou les grilles (44, 48) présentent une (72) ou plusieurs parties creuses s'étendant de la direction de déplacement des poussoirs (36, 54), la partie ou les parties creuses (72) étant agencées pour recevoir et guider les unités alimentaires relatives (46).

18. Machine (100) selon la revendication 1, dans laquelle les moyens de transport comportent un chariot (109) qui est relié à une actionneur (112) agencé pour le dépasser en translation à partir de la zone d'insertion (144) vers la zone de chauffage (148), et à partir de la zone de chauffage (148) vers la zone de retrait (144).

19. Machine (100) selon les revendications 1, 2 et 3, dans laquelle lesdites portes (104 ; 106) sont positionnées sur des côtés opposés de la machine (100).

20. Machine (100) selon la revendication 18, dans laquelle un support (108) est fixé sur ledit chariot (109) d'une manière à pouvoir tourner.

21. Machine (100) selon les revendications 2 et 3, dans laquelle un système de sécurité empêche l'ouverture d'une première porte (104, 106) lorsque l'autre (106, 104) est ouverte.
